(19) Europäisches Patentamt

European Patent Office

Office européen des brevets

(11) Publication number : **0 442 664 A1**

## (12) EUROPEAN PATENT APPLICATION

(21) Application number : **91301007.0**

(22) Date of filing : **07.02.91**

(51) Int. Cl.⁵ : **A01F 25/20**

(30) Priority : **12.02.90 GB 9003102**
**10.10.90 GB 9022055**

(43) Date of publication of application :
**21.08.91 Bulletin 91/34**

(84) Designated Contracting States :
**AT BE CH DE FR LI NL SE**

(71) Applicant : **MONTEC SYSTEMS LIMITED**
**Unit 11 Sandford Lane**
**Wareham Dorset BH20 4DY (GB)**

(72) Inventor : **Hayward, Richard George**
**c/o Montec Systems Limited, Unit 11, Sandford**
**Lane**
**Wareham, Dorset BH 20 4DY (GB)**

(74) Representative : **Jones, Michael Raymond et al**
**HASELTINE LAKE & CO. Hazlitt House 28**
**Southampton Buildings Chancery Lane**
**London WC2A 1AT (GB)**

(54) **Silage feeder.**

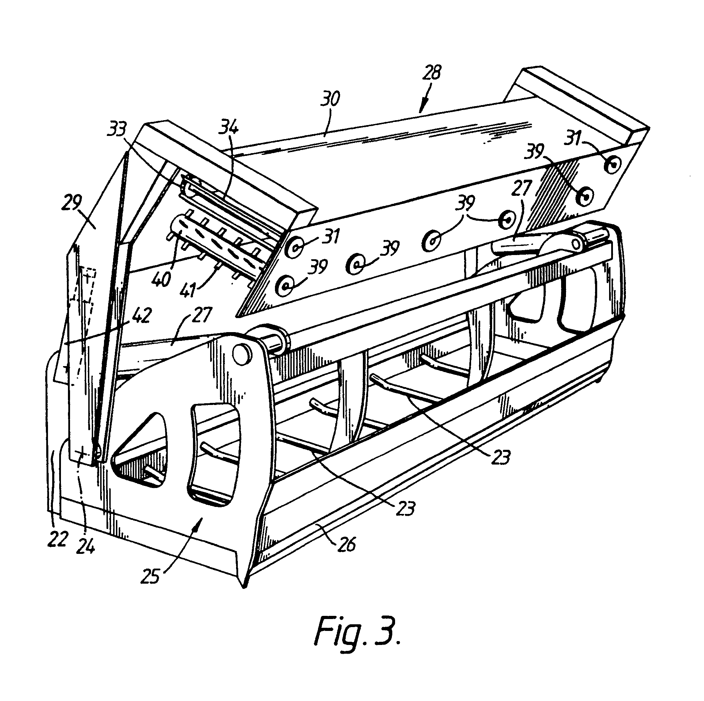

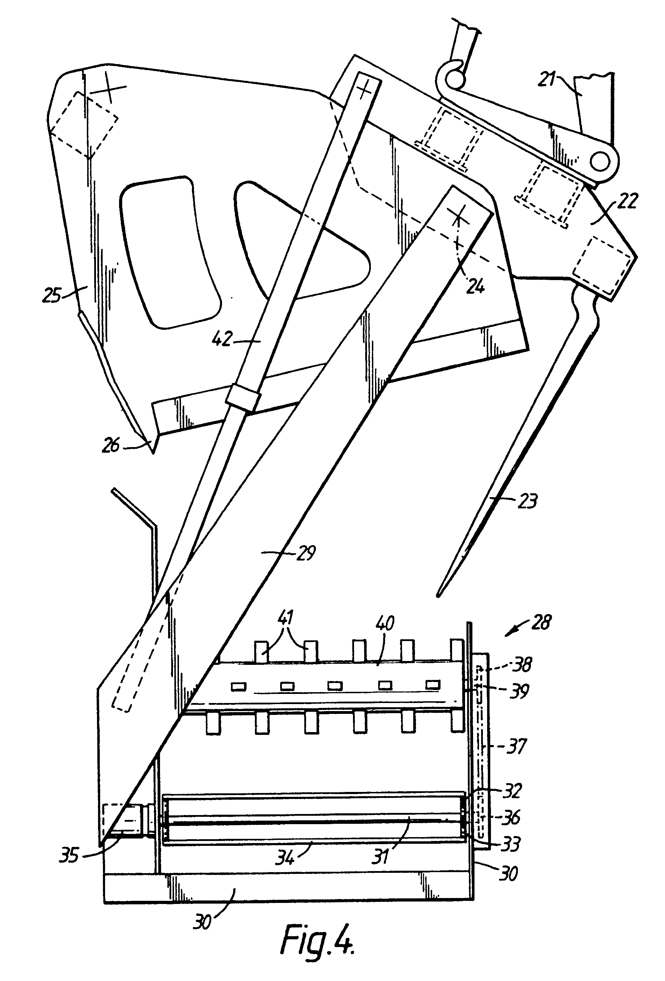

(57)   There is disclosed an attachment (28) for use with a shear grab (22-27), the attachment (28) being disposable in either an inoperative (Fig. 3) or an operative (Fig. 4) position, in which latter it is capable of shredding/comminuting a block of silage cut by the shear grab (22-27) and of delivering the silage to an animal feeding location in its shredded/comminuting form.

EP 0 442 664 A1

Fig.4.

# SILAGE FEEDER

This invention relates to an attachment which is intended for use with a known shear grab. At least one commercial shear grab has been in use for some time and acts to cut a block of silage from a so-called silage clamp, which block is then transported by a tractor-/loader to an animal feeding location where it is deposited in a substantially unchanged condition. Many animals find it quite difficult to deal with silage in the form of a block and take some considerable time to tear away from that block portions of the silage which they are going to eat. The result is that weak and/or timid animals tend to be underfed whilst strong and/or bullying animals tend to overeat.

An object of the present invention is to provide an attachment which can be used with a known shear grab and that will largely, if not completely, overcome the disadvantage that has just been briefly described, which disadvantage is inherent in the use of a known shear grab alone.

According to the present invention, there is provided an attachment for use with a shear grab, the attachment being disposable in either an inoperative position or an operative position, in which latter it is capable of shredding/comminuting a block of silage cut by the shear grab and of delivering the silage to an animal feeding location in its shredded/comminuted form.

Preferably the attachment is pivotally mountable or mounted with respect to the shear grab as this assists in the correct relative location of the attachment in its operative position.

In one embodiment of the attachment according to the present invention, the attachment includes one or more than one shredding or comminuting roller which has an axis parallel or substantially parallel to the axis about which the attachment pivots between the inoperative and operative positions.

In another embodiment of the attachment according to the present invention, the rollers have axes perpendicular or substantially perpendicular to, and spaced from, the axis about which the attachment pivots between the inoperative and operative positions.

The rollers, of either embodiment, can have blades use to shred/comminute the block of silage.

The attachment preferably has a conveyor, for example a conveyor belt, onto which, in practice, shredded or comminuted silage can fall and by which it can be fed, via one end or the other of the attachment, to the animals.

For a better understanding of the present invention, and to show how the same may be carried into effect, reference will now be made, by way of example, to the accompanying drawings, in which :-

Figure 1 is a perspective view of one embodiment of an attachment in accordance with the present invention shown connected to a known shear grab unit and occupying a raised inoperative position ;

Figure 2 is a side view substantially corresponding to Figure 1 but with the attachment in accordance with the present invention turned downwardly through substantially 180° to an operative position and with parts of the known shear grab occupying different dispositions to those illustrated in Figure 1 ;

Figure 3 is a perspective view of a second embodiment of an attachment in accordance with the present invention, pivotally connected to a known shear grab unit and occupying a raised inoperative position ; and

Figure 4 is a side view of the equipment shown in Figure 3 but with the attachment in its lowered operative position, and with parts of the shear grab unit occupying different dispositions to those illustrated in Figure 3.

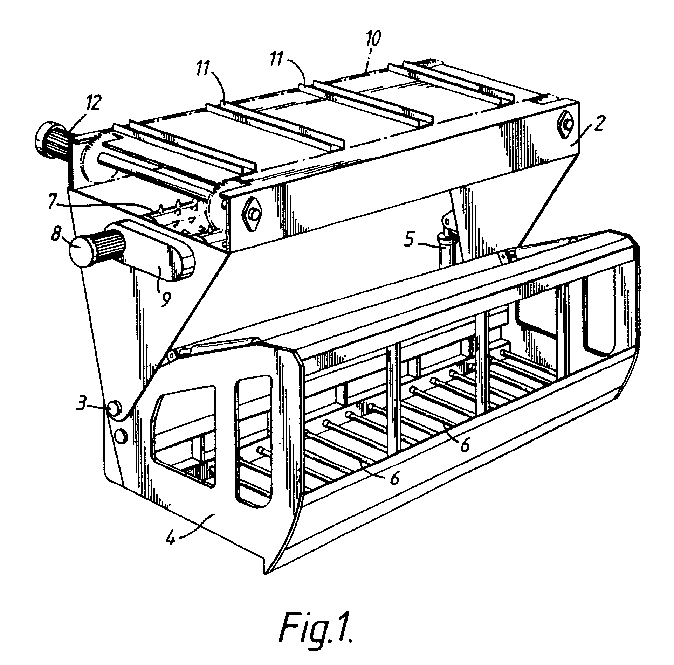

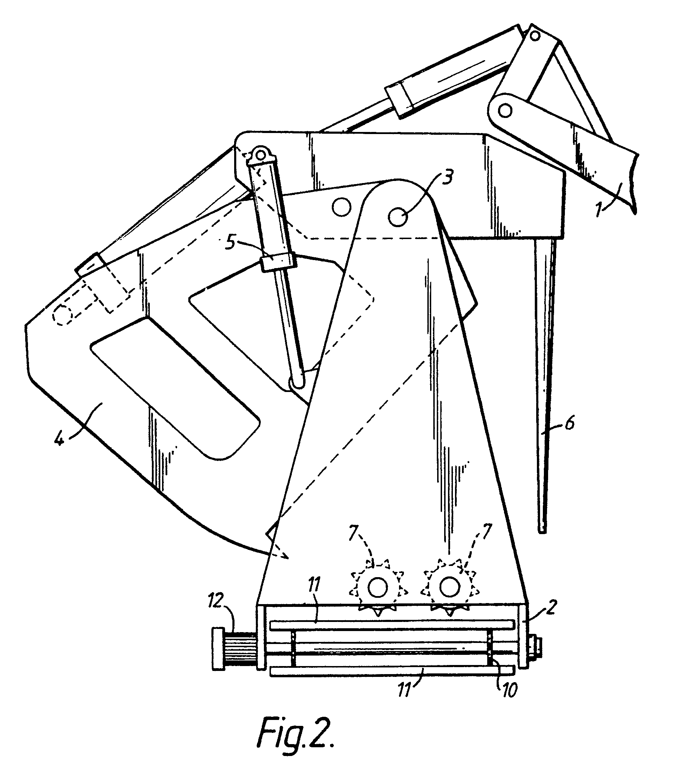

Referring to Figures 1 and 2 of the accompanying drawings, the known shear grab is connected in a conventional manner to a tractor front loader 1 and is operative, in known manner, to cut a block of silage.

A frame 2 forming part of the attachment is connected by substantially horizontally aligned pivots 3 to the body 4 (in fact to the cutting part) of the known shear grab, said pivots 3 being connected either to a moving part of the body by using existing pivot points or, if preferred, to a fixed part thereof. The frame 2 is moved between its raised inoperative position and its lowered operative position by hydraulic or other fluid pressure operated piston and cylinder assemblies 5 (only one of which is shown in Figure 1).

In the raised inoperative position of the attachment which is shown in Figure 1 of the drawings, the known shear grab which is then positioned principally at a lower level is free to operate in its intended manner to cut a block of silage from a so-called clamp or, possibly, some other source. The shear grab itself will normally occupy the position thereof that is shown in Figure 1 of the drawings. After a block of silage has been cut by the shear grab, the cutting part 4 thereof is raised and the attachment of this invention is lowered. A plurality of regularly spaced apart and substantially parallel tines 6 of the shear grab are then also moved through substantially 90°C until they all extend substantially vertically, rather than substantially horizontally. Two shredding or comminuting rollers 7 of the attachment are now at a location just below, and just forwardly of (as seen in Figure 2), the downwardly hanging substantially vertically disposed tines 6 of the shear grab.

A block of sillage cut by the shear grab slides under gravity down the tines 6 until the block meets the rollers 7. As can be seen in the drawings, the shredding rollers 7 carry teeth that are preferably arranged in either helical rows or rows that extend substantially parallel to the axes of rotation of the rollers 7, said rollers 7 being conveniently, but not essentially, driven by a hydraulic motor 8 from which a chain (not visible) contained within a casing 9 is arranged to transmit drive from the motor 8 to both rollers 7. A single rotary shredding roller 7 may be provided instead of the two that are described and illustrated. A conveyor 10 lies immediately beneath the shredding rollers (or roller) 7 when the attachment is disposed in the operative position thereof that is shown in Figure 2 and preferably, but not essentially, takes the illustrated form of two chains perpendicularly interconnected at regular intervals by slats 11. The conveyor 10 is driven by a motor 12 which again preferably, but not essentially, is a hydraulic motor arranged to rotate a shaft carrying sprocket wheels at one end of the conveyor 10. Amongst possible alternatives, the conveyor 10 could be a rubber or other elastomeric belt or some form of displacing auger could be employed.

It will be apparent that silage shredded, comminuted or torn out by the rollers 7 will fall downwardly, in the operative position of Figure 2, onto the conveyor 10 and that said conveyor 10 can be employed to deliver the broken up silage, ready to be eaten by animals, either to the left, or to the right, of the attachment, it only being necessary to reverse the direction of operation of the motor 12 to change silage delivery from one side of the attachment to the other. The sides of the frame 2 are preferably "filled in" so that silage is prevented from spilling out of the grab. Once the silage feeding operation has been completed, the frame 2 is raised by the use of the cylinders 5 to bring it to itts inoperative position (Figure 1), the portion of the known shear grab carrying the times 6 being returned to its normal position at substantially the same time, that is to say, a position in which its tines 6 are substantially horizontally disposed as shown in Figure 1 of the drawings.

Reference will now be made to the embodiment illustrated in the Figures 3 and 4 of the drawings. In the arrangement illustrated in Figure 3 it is to be imagined that a block of silage has been cut from a clamp by the shear grab unit, in a conventional manner, and it can be seen that the attachment is in the raised, inoperative position. In contrast, in the arrangement of the same equipment shown in Figure 4, that part of the shear grab unit carrying the tines has been depressed, whereas the cutting part of the shear grab unit has stayed in much the same disposition in absolute terms but has been raised relative to the tine-carrying part. The attachment has been swung downwards through 90° relative to the tine-carrying part.

The shear grab forming part of the equipment shown in Figures 3 and 4 can be conventional and is attached to a tractor front loader 21 (shown in Figure 4) by the main frame 22 of the shear grab. In the disposition shown in Figure 3 tines 23 project horizontally forward from a lower end region of the main frame 22. Pivotally mounted about pivot points 24 on the main frame 22 is the cutting part 25 of the shear grab, which is conventional in itself and which has at its lower front edge a cutting edge 26. Rams 27 which can by hydraulically or pneumatically actuated can be employed to cause relative movement between the main frame 22 which carries the tines 23, on the one hand, and the cutting part 25, on the other hand, to enable the cutting part to perform its usual cutting function.

Generally indicated by the reference numeral 28 is the attachment, which includes two spaced-apart arms 29 which are pivotally mounted with respect to the pivot points 24 and which lead to a channel-shaped frame 30 which had an elongate channel which extends parallel to the front of the shear grab. Extending across the channel of the frame 30 are two axles 31, near each end of both of which are sprockets 32 on which are mounted two chains 33 on which, in turn, are mounted slats so that the rotation of one axle 31 causes, via the sprockets and the chains, rotation of the other axle 31 and movement of the slats along the channel. One of the axles 31 is powered by a motor 35. At least one of the axles 31 also has mounted thereon a toothed wheel 36 which, by means of a chain or chains 37, is linked to, and is capable of driving, toothed wheels 38 mounted on respective axles 39 which, like the axles 31, also span the channel of the frame 30. Securely mounted on the axels 39 are cylinders 40 which carry blades, the arrangement being such that, when the motor 35 is actuated, not only do the axels 31 rotate and the slats 34 move along the channel, but also the axles 39, cylinders 40 and blades 41 rotate in order to perform a shredding or comminuting action.

Rams 42 extend between the main frame 22 of the shear grab and an end region of the arms 29 remote from the pivot points 24, to cause pivotal movement of the attachment relative to the main frame.

In the arrangement illustrated in Figures 3 and 4, there are five rotatable axles 39 but a different number could be employed.

It is to be appreciated that the different axles 39 can be made to rotate in the same rotational direction or in alternating directions depending upon the style of comminuting and shredding required. It is a simple matter for the chains and toothed wheels to be organised so that, with the motor 35 running in any given direction, the axles 39 rotate in the desired respective of rotational directions.

In use, at the start, the attachment 28 is in the raised, inoperative position, as shown in Figure 3. The shear grab can then function in the usual way with the tines 23 being embedded in a clamp of silage, whereupon the cutting part 25 of the shear grab is actuated by the rams 27 so that the cutting edge 26 cuts down into the clamp to cut off a block of silage.

When it is ready to dispense the silage, the cutting part 25 is raised and the attachment is swung downwards and forwardly through 90°C, relative to the main frame 22. When the main frame is tilted downwards, the attachment 28 is tilted further downwards and the tines 23 assume the disposition shown in Figure 4, with the attachment then positioned immediately below the opened shear grab, whereby the block of silage is free to slide down the tines onto the comminuting cylinders 40 which are actuated to rotate by means of the motor 35 and the previously described drive system, the blades 41 cutting into the block and shredding the block. The shredded material then falls onto the slats 34 which convey the shredded material to one end or the other of the attachment 28 so as to feed the animals.

Compared with the embodiment illustrated in Figures 1 and 2, the embodiment illustrated in Figures 3 and 4 is simpler in that the one motor can through a relatively simple mechanism not only drive the axles 31 which drive the slats 34, but also drive the axles 39 which drive the cylinders 40 and blades 41.

As with the embodiment illustrated in Figures 1 and 2, the embodiment illustrated in Figures 3 and 4 can be used to deliver the broken up silage, ready to be eaten by animals either to the left or to the right of the attachment, depending upon the direction of operation of the motor 35. Similarly, instead of having chains 33 with slats 34, a conveyor belt, formed of a rubber or other elastomeric material, could be employed, as could also some alternative form of displacement auger.

## Claims

1. An attachment for use with a shear grab, the attachment being disposable in either an inoperative position or an operative position, in which latter it is capable of shredding/comminuting a block of silage cut by the shear grab and of delivering the silage to an animal feeding location in its shredded/comminuted form.

2. An attachment according to claim 1, which is pivotally mountable or mounted with respect to a shear grab.

3. An attachment according to claim 1 or 2, which includes one or more than one shredding or comminuting roller which has an axis parallel or substantially parallel to the axis about which the attachment pivots between the inoperative and operative positions.

4. An attachment according to claim 1 or 2, which includes one or more than one shredding or comminuting roller which has an axis perpendicular or substantially perpendicular, and spaced from, the axis about which the attachment pivots between the inoperative and operative positions.

5. An attachment according to claim 3 or 4, wherein the or each roller has blades and/or teeth for shredding or comminuting the block of silage.

6. An attachment according to claim 4 or 5, which includes means capable in use of causing the or each roller to rotate about its own axis.

7. An attachment according to any preceding claim, which includes a conveyor for conveying shredded or comminuted silage.

8. An attachment according to any preceding claim, which includes means for causing movement of the attachment between the inoperative and operative positions.

9. An attachment according to claim 6 and/or claim 7 and/or claim 8, which includes a hydraulically operated system for powering the means for causing rotation of the roller and/or the conveyor and/or the means for causing movement of the attachment, respectively.

10. In combination, a shear grab and, pivotally mounted thereto, an attachment according to any preceding claim.

Fig.1.

Fig.2.

Fig. 3.

Fig.4.

**European Patent Office**

# EUROPEAN SEARCH REPORT

Application Number

EP 91 30 1007

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 367 855 (H. VON DER HEIDE)<br>* Column 1, line 57 - column 2, line 44; figures 1-4 *<br>--- | 1,3-10 | A 01 F 25/20 |
| A | EP-A-0 166 653 (ETABLISSEMENTS LUCAS)<br>* Page 7, line 26 - page 8, line 27 *<br>--- | 1,7 | |
| P,A | EP-A-0 359 482 (MONTEC SYSTEMS LTD)<br>* Column 1, line 38 - column 3, line 56; figure 1 *<br>--- | 1,4-7,9 | |
| A | FR-A-2 601 551 (H. BURTIN)<br>* Page 2, line 21 - page 3, line 23 *<br>--- | 1,4-9 | |
| A | DE-A-3 815 229 (STRAUTMANN & SÖHNE GmbH)<br>----- | | |
| | | | **TECHNICAL FIELDS SEARCHED (Int. Cl.5)**<br><br>A 01 F |

The present search report has been drawn up for all claims

| Place of search | Date of completion of the search | Examiner |
|---|---|---|
| THE HAGUE | 26-04-1991 | ELSWORTH D.S. |